(19) Europäisches Patentamt

European Patent Office

Office européen des brevets

(11) **EP 1 429 410 B1**

(12) **EUROPEAN PATENT SPECIFICATION**

(45) Date of publication and mention
of the grant of the patent:
**08.03.2006 Bulletin 2006/10**

(51) Int Cl.:
*H01M 8/10* (2006.01)  *H01M 4/96* (2006.01)

(21) Application number: **03028278.4**

(22) Date of filing: **10.12.2003**

(54) **Electrolyte membrane-electrode assembly for fuel cell and operation method of fuel cell using the same**

Elektrodenmembrananordnung für Brennstoffzelle und Betriebsverfahren dieser Anordnung enthaltende Brennstoffzelle

Ensemble électrode-membrane pour pile à combustible et procédé de fonctionnement de la pile à combustible utilisant cet ensemble

(84) Designated Contracting States:
**DE FR GB IT**

(30) Priority: **11.12.2002 JP 2002359314**

(43) Date of publication of application:
**16.06.2004 Bulletin 2004/25**

(73) Proprietor: **MATSUSHITA ELECTRIC INDUSTRIAL CO., LTD.**
**Kadoma-shi, Osaka 571-8501 (JP)**

(72) Inventors:
• **Yoshida, Akihiko**
**Hirakata-shi**
**Osaka 573-0165 (JP)**
• **Hori, Yoshihiro**
**Ikoma-shi**
**Nara 630-0141 (JP)**
• **Sakai, Osamu**
**Moriguchi-shi**
**Osaka 570-0039 (JP)**

• **Uchida, Makoto**
**Hirakata-shi**
**Osaka 573-1145 (JP)**
• **Yasumoto, Eiichi**
**Soraku-gun**
**Kyoto 619-0238 (JP)**
• **Kosako, Shinya**
**Kobe-shi**
**Hyogo 657-0015 (JP)**

(74) Representative: **Schirdewahn, Jürgen**
**Jung HML**
**Patentanwälte**
**Schraudophstrasse 3**
**80799 München (DE)**

(56) References cited:
**EP-A- 1 139 476**  **US-A- 5 509 942**
**US-B1- 6 444 347**

**Description**

BACKGROUND OF THE INVENTION

The present invention relates to an electrolyte membrane-electrode assembly for polymer electrolyte fuel cells using a proton conductive polymer electrolyte membrane, and an operation method of a fuel cell using this electrolyte membrane-electrode assembly.

An electrolyte membrane-electrode assembly (hereinafter referred to as MEA) for a polymer electrolyte fuel cell (hereinafter referred to as PEFC) generally comprises a polymer electrolyte membrane and a pair of electrodes with the polymer electrolyte membrane interposed therebetween. Each of the electrodes comprises a catalyst layer in contact with the polymer electrolyte membrane, and a gas diffusion layer having a water repellent layer in contact with the catalyst layer. The MEA is supported from both sides thereof by separator plates comprising gas flow channels and, together with sealants for preventing gas leakage, cramped by a constant pressure to constitute a unit cell of a PEFC.

In the separator plate formed are gas flow channels like a groove for instance, from an inlet to an outlet for a reaction gas (fuel gas or oxidant gas), and the reaction gas is arranged to flow in the gas flowing channel(s). The gas diffusion layer is required to have the function of diffusing a reaction gas supplied through the gas flow channel, to be supplied throughout the catalyst layer. Another function the gas diffusion layer is required to have is discharging redundant water in order to prevent water, produced in the cathode-side catalyst layer due to the reaction of the PEFC in operation, from impairing the diffusibility of the reaction gas. Namely, the important function of the gas diffusion layer is avoiding produced water from clogging the micropores within the gas diffusion layer, and thereby making the produced water pass therethrough and smoothly reach the gas flowing channel in the separator plate. The gas diffusion layer is in contact with convex portions (libs), formed on each side of the respective gas flowing channel in the separator plate, to be electrically connected to the separator plate, and it hence serves to conduct a current generated at the MEA to the separator plate.

A water repellent layer is usually formed on the catalyst-layer-contacting-side of the gas diffusion layer, and a fluorocarbon resin is used as the water repellent material of the water repellent layer. The water repellent layer comprises an electron conductive material such as carbon, together with the water repellent material. In the conventional commonly-used technique, a base material of a gas diffusion layer has a porous structure for securing gas diffusion ability, a water repellent layer is formed on the gas diffusion layer for controlling water penetrability, and further, an electron conductive material such as carbon fiber, metal fiber or the like is used as the gas diffusion layer base material for securing electron conductivity. As a typical gas diffusion layer base material used has been carbon paper, carbon felt, carbon fiber woven fabric, or the like.

There are differences in those characteristics due to differences in basis weight and thickness of carbon paper or carbon felt. Since carbon paper, as well as carbon felt, is composed of carbon fibers arranged at random, however, there are not much differences in gas diffusibility and water permeability due to a difference in fiber arrangement. Since a carbon fiber woven fabric is woven such that carbon fibers are regularly arranged, on the other hand, the weave of the fabric is the another important dominant factor of the above characteristics besides the basis weight and the thickness. That is, unlike carbon paper and carbon felt, a carbon fiber woven fabric has a specific property that while it may become a material having optimum characteristics for a gas diffusion layer base material, it easily results adversely, depending on the weave thereof. A basic aim of the invention is to control a carbon fiber woven fabric to obtain optimum characteristics for a gas diffusion layer base, material.

A typical gas diffusion layer is produced, for example, in such a manner that a coating for formation of a water repellent layer, prepared by dispersing carbon black and a fluorocarbon resin in water, is applied onto one side of a base material to form a water repellent conductive layer (hereinafter referred to as water repellent layer). In this case, in addition to the properties of the coating and a method for applying the coating onto the base material, the properties of the base material surface significantly control the state of the water repellent layer formation.

Water repellency required for this water repellent layer also differs depending on the operating condition of the fuel cell. When the cell is operated under a high humidification condition, the water repellency of the outermost surface of the gas diffusion layer in contact with the catalyst layer is particularly not very high. When the cell is operated under a low humidification condition, the aforesaid water repellency is particularly high. That is to say, in the case where the outermost surface of the catalyst-layer-contacting-side of the gas diffusion layer has strong water repellency, there occurs a strong action of confining water within the electrode even when the polymer electrolyte membrane is in a sufficiently humidified state.

In an operation under a high humidification condition where a great amount of water is supplied from the outside, the aforesaid water repellency may be low since there is little need for the effect of confining water. In an operation under a low humidification condition where a small amount of water is supplied from the outside, on the other hand, the aforesaid water repellency is preferably increased. Especially in an operation under a high humidification condition, it is of importance that a water repellent layer (hereinafter referred to as uniform water repellent layer) be formed, in which not only the strength of the aforesaid water repellency of the outermost surface is controlled, but also the water repellency is gradually attenuated with a consecutive gradient or slope in a graphical interpretation, from the catalyst-layer-contacting-side of the outermost surface of the gas diffusion layer to the separator-side-contacting side thereof. This permits smooth discharge of redundant water, which is kept produced due to the reaction of the cell in operation, to the gas flow channel side, without clogging of the micropores within the gas diffusion layer with the redundant water.

As methods for varying water repellency of a water repellent layer typically conducted have been a method of varying a weight ratio between carbon black and a fluorocarbon resin in a water repellent layer, and a method of varying thickness of a water repellent layer or an applied amount of a coating for water-repellent-layer formation while the aforesaid weight ratio is kept unvaried. In these cases, however, direct application of the coating for water-repellent-layer formation onto a carbon fiber woven fabric would result in initial infiltration of the coating into a portion with a lower fiber density of the base material, and it is therefore difficult to uniformly apply the coating.

Occurrence of such non-uniform infiltration of the coating would lead to formation of a non-uniform water repellent layer within a gas diffusion layer, where portions with strong water repellency and portions with weak water repellency exist at random. The gap between the portions with strong water repellency is apt to trap water therein, and the water once trapped is not readily discharged. In other words, with the occurrence of non-uniform infiltration of the coating, as above described, it would become impossible to form a uniform water repellent layer, and thus impossible to effectively discharge redundant water. Since non-uniform infiltration of a coating into a base material would significantly impair water permeability of a gas diffusion layer, accordingly, it is important particularly in a fuel cell operated under a high humidification condition to inhibit such non-uniform infiltration and form a uniform water repellent layer.

As a measure thereto considered has been a method which comprises previously applying a coating onto a different sheet to form a water repellent layer and then transfer-printing the resultant water repellent layer onto a gas diffusion layer base material made of carbon. This transfer-printing method however has a drawback that the number of processing steps increases. Further, although inhibition of the aforesaid infiltration by the use of a coating for water-repellent-layer formation, which is prepared to have a suitably high degree of viscosity, has been considered, there has not been obtained a sufficient inhibiting effect.

Furthermore, in a conventional carbon fiber woven fabric to be used as a gas diffusion layer base material, since concave portions and convex portions with a large level difference therebetween exist on the surface, there is a problem that a large number of gaps are formed in a junction between a catalyst layer and a gas diffusion layer. The gaps may be clogged with water during operation of a PEFC, to cause deterioration in discharge properties of water. As thus described, in a PEFC operated under a high humidification condition, despite the possibility that the use of a carbon fiber woven fabric as a gas diffusion layer base material may control the carbon fiber woven fabric to have the optimum characteristics for the gas diffusion layer base material, such optimization has not currently been carried out.

With the aim of solving the aforesaid problems with the conventional PEFC, especially with the gas diffusion layer therein, an object of the present invention is to provide an MEA suitable for an operation under a high humidification condition by smoothing the surface of a carbon fiber woven fabric to be used as a gas diffusion layer base material, and further optimizing the surface so as to form thereon a uniform water repellent layer in which non-uniform infiltration of a coating for water-repellent-layer formation is inhibited.

From document US 6,444,347 B1 a gas diffusion electrode is known, which comprises a cloth of activated carbon fibres having a first face coated in a hydrophobic material and a second face on which particles of catalyst are fixed directly and are dispersed in substantially uniform manner over the fibres. The electrode can be used in an electrochemical cell of a proton exchange membrane fuel cell battery or in an electrochemical reactor.

BRIEF SUMMARY OF THE INVENTION

This object is attained by the features of claim 1.

The carbon fiber woven fabric comprises not only wovens but also knitted fabrics and thread layers. It is possible as well that the fiber woven fabric is arranged in a loose structure.

As will be explained later the advantages of the above mentioned prior art can be avoided or at least minimized this way. A possible concept of explanation may be as follows. It is believed that flatness and uniformity of the water-repellent layer can be maintained by a multi-leg support provided by the material of the layer, in which support one leg each is anchored at every opening portion, that is in a regular pattern resulting in a uniform infiltration of the water-repellent layer. This way possible micropores within the threads can be neglected. The rather wide extension of the crossing portions of the warp and weft threads makes it possible that variations of the level of the outer surface of the water-repellent layer can be avoided of minimized.

It is preferable that the relationship:

$$1/1500 \leqq (10/W-Y)(10/Z-X)/XY \leqq 1/5$$

is satisfied when the carbon fiber woven fabric has a warp density of Z threads/cm, a weft density of W threads/cm, a warp thickness of X mm and a weft thickness of Y mm.

The threads can be monofil or multifil, straight or twisted like twines, for instance. It is preferred that the threads or fibers have no own open pores or only a quantity of neglectable micropores. This can be attained by use of carbon fibers.

It is preferable that the carbon fiber woven fabric have a thickness in the range of 0.05 mm to 0.3 mm, preferably in the range of 0.05 mm to 0.2 mm. It is preferable that the carbon fiber woven fabric have a density in the range of 0.32 g/cc to 0.42 g/cc. It is further preferable that one of the warp density and the weft density of the carbon fiber woven fabric be in the range of 16 threads/cm to 45 threads/cm, and the other of the two densities be in the range of 12 threads/cm to 40 threads/cm.

It is preferable that equally spaced warp threads are crossing equally spaced weft threads at right angles. It is preferable that the threads are composed of plural fibers (threads), such as twines made of at least two fibers (threads).

The present invention provides an operation method of a fuel cell which comprises the aforesaid electrolyte membrane-electrode assembly for fuel cells in accordance with the present invention, and generates electric power by providing a supply of a humidified fuel gas to the anode and a supply of a humidified oxidant gas to the cathode, comprising a step of controlling the dew point of the fuel gas and the dew point of the oxidant gas to temperatures equivalent to, or 5°C or less lower than, the temperature of the electrolyte membrane-electrode assembly in operation.

BRIEF DESCRIPTION OF THE SEVERAL VIEWS OF THE DRAWING

FIG. 1 is a plan view of a carbon fiber woven fabric in the present invention.

FIG. 2 is a vertical sectional view of a unit cell comprising an electrolyte membrane-electrode assembly in an example of the present invention.

DETAILED DESCRIPTION OF THE INVENTION

The present invention enables provision of an MEA suitable for an operation under a high humidification condition by controlling a fabric construction of a carbon fiber woven fabric to be used as gas diffusion layer base material in a PEFC, so as to optimize the surface condition of the carbon fiber woven fabric, and an application condition of a coating for water-repellent-layer formation onto the carbon fiber woven fabric.

The base material of the gas diffusion layer in the present invention is made of a carbon fiber woven fabric, which is obtained by weaving a warp and a weft composed of one or more electron conductive carbon fiber(s), where an opening being formed at or adjacent to crossing points of the warp and the weft.

The carbon fiber woven fabric to be used for the MEA of the present invention is characterized in that the relationship: $1/1500 \leq (10/W-Y)(10/Z-X)/XY \leq 1/5$ is satisfied when the carbon fiber woven fabric has a warp density of Z threads/cm, a weft density of W threads/cm, a warp thickness of X mm and a weft thickness of Y mm.

In the above relational expression, XY mm$^2$ corresponds to the area of portions where warp thread is crossing weft thread (hereinafter referred to as crossing portions), and (10/W-Y)(10/Z-X)mm$^2$ corresponds to the area of opening portions where neither warp thread nor weft thread exists (hereinafter referred to as opening portions). Namely, the carbon fiber woven fabric of the present invention is characterized in that the area ratio of the opening portions to the crossing portions: (10/W-Y)(10/Z-X)/XY is not less than 1/1500 and not more than 1/5.

In the present invention, the carbon fiber woven fabric to be used as the gas diffusion layer base material is formed of carbon fiber thread, and the most common fabric structure is plain-weave. Other than such a plain carbon fiber woven fabric used can be a carbon fiber woven fabric having a twill or satin weave structure. In each of these carbon fiber woven fabrics, warp threads and weft threads are regularly combined in a geometrical pattern. Namely, a carbon woven fiber fabric is constituted such that carbon fiber threads (warp threads or weft threads) of a first group, arranged mutually in parallel, are sequentially combined at right angles with carbon fiber threads (weft threads or warp threads) of a second group in a prescribed method. The carbon fiber threads belonging to the second group are also kept mutually parallel, to constitute a fabric.

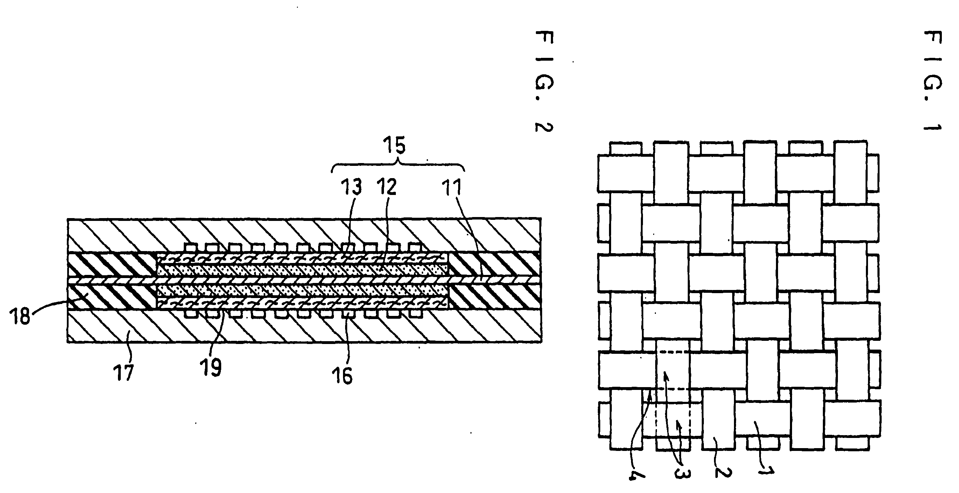

Next, a fabric structure of a carbon fiber woven fabric will be described by taking a plain carbon fiber woven fabric for instance. FIG. 1 is a plan view of a plain carbon fiber woven fabric, in which equally spaced warp threads 1 are crossing equally spaced weft threads 2 at right angles. Other than the case that the warp threads 1 and the weft threads 2 are composed of single thread (monofil), there is the case that these threads are composed of plural threads (multifil), such as twines made of at least two threads or fibers. Since the cross section of the warp thread 1 or the cross section of the weft thread 2 is not necessarily in circular form, in the present invention, the thickness of the warp thread and the thickness of the weft thread respectively represent the width of the warp thread and the width of the weft thread which are illustrated in the plan view of the carbon fiber woven fabric, for the sake of convenience.

In the carbon fiber woven fabric of the present invention, the area of opening portions 4 where neither the warp thread 1 nor the weft thread 2 exists is decreased relative to the area of the crossing portions 3 where the warp thread 1 is crossing the weft thread 2 so as to make the ratio between the two areas 1/1500 to 1/5. Thereby, when a coating for water-repellent-layer formation is applied onto the carbon fiber woven fabric, initial infiltration of the coating from the opening portions 4 is inhibited, allowing formation of a uniform water repellent layer. It is thereby possible to obtain a gas diffusion layer having a characteristic that water repellency is gradually attenuated with a gentle slope or gradient in a graphical interpretation, from the catalyst-layer-contacting-side of the surface through the gas-flow-channel-side of the surface. The use of an MEA comprising such a gas diffusion layer enables smooth discharge of redundant water into gas flow channels even in an operation under a high humidification condition, with no water trapped into micropores within the gas diffusion layer.

A problem having hitherto been raised is that when plural MEAs are stacked and then cramped to constitute a PEFC, an increase in cramping pressure for reducing contact resistance between constituents would cause deflection of the constituents. To avoid this required is keeping the cramping pressure low within the range of causing no gas leakage. With the low cramping pressure, there are produced gaps in an interface between a catalyst layer and a gas diffusion layer, along with concavities and convexities of a base material. Since those gaps are apt to be clogged with water, redundant water is not discharged out of the MEAs.

According to the present invention, by increasing the area ratio of the crossing portions 3 of the carbon fiber woven fabric, the level difference between the concave portions and convex portions on the surface thereof is reduced and the surface is thus smoothed. This can solve the aforesaid problem. That is, the carbon fiber woven fabric of the present invention has a surface with a small level difference between concave portions and convex portions because the area of the crossing portions 3 having a larger thickness is 5 to 1500 times as large as the area of the opening portions 4 having a smaller thickness. The use of this carbon fiber woven fabric can prevent the aforesaid formation of gaps in the interface between the catalyst layer and the gas diffusion layer, whereby the problem of the clogging with redundant water can be dissolved.

As thus described, a PEFC using the MEA in accordance with the present invention, which comprises a gas diffusion layer where a uniform water repellent layer is formed on a carbon fiber woven fabric having a smooth surface, can exert high performance in an operation under a high humidification condition which in particular requires the gas diffusion layer to have discharge capacity of redundant water.

In a carbon fiber woven fabric as a gas diffusion layer base material, when an area ratio of opening portions to crossing portions exceeds 1/5, the surface thereof becomes insufficiently smooth. Further, it becomes impossible to sufficiently inhibit non-uniform infiltration of a coating. When the area ratio is below 1/1500, meanwhile, pores within a gas diffusion layer do not result in insufficient gas diffusion ability and water permeability.

The carbon fiber woven fabric to be used for the MEA of the present invention has a thickness which is preferably in the range of 0.05 mm to 0.30 mm, and more preferably in the range 0.05 mm to 0.20 mm. Reduction of the thickness of the carbon fiber woven fabric can make the level difference between the concave portions and convex portions on the surface thereof smaller and the surface smoother. It is thereby possible to more effectively prevent the junction between the gas diffusion layer and the catalyst layer from being clogged with water, so that an MEA capable of more effectively preventing occurrence of the flooding phenomenon in an operation under a high humidification condition can be provided.

The thinner a carbon fiber woven fabric is made, the smaller a volume of gaps within a gas diffusion layer and the smaller an amount of water staying within the gas diffusion layer, and hence, such water can be readily discharged. As for a carbon fiber woven fabric having a thickness less than 0.05 mm, however, it often happens that the handling thereof is difficult or the carbon fiber woven fabric cannot be woven because of insufficient tensile strength of carbon fiber thread as the raw material thereof. As for a carbon fiber woven fabric having a thickness over 0.30 mm, on the other hand, there tends to occur a negative effect that a level difference between concave portions and convex portions on the surface of the carbon fiber woven fabric increases, causing a junction between a gas diffusion layer and a catalyst layer to be clogged with water.

It is preferable that the carbon fiber woven fabric for use in the MEA of the present invention have a density in the range of 0.32 g/cc to 0.42 g/cc. With the fabric density of the carbon fiber woven fabric kept low, the carbon fiber woven fabric is compressed by pressure applied at the time of cramping the stacked fuel cell, and it thus becomes easier to smooth the surface thereof.

In such a manner, with the carbon fiber woven fabric compressed for smoothing, the level difference between the convex portions and concave portions becomes smaller to allow elimination of gaps, which may be clogged with water, from the junction of the gas diffusion layer and the catalyst layer. This as a result enables provision of an MEA capable of more effectively preventing occurrence of the flooding phenomenon in an operation under a high humidification condition. The lower the density of the carbon fiber woven fabric is, the larger the above effect is. However, when a carbon fiber woven fabric has a density smaller than 0.32 g/cc, the mechanical strength of the carbon fiber woven fabric is so insufficient that it becomes difficult to handle the carbon fiber woven fabric in production of an MEA. When a carbon fiber woven fabric has a density larger than 0.42 g/cc, on the other hand, the carbon fiber woven fabric is not sufficiently smoothed by pressure applied in the aforesaid cramping, making it impossible to sufficiently obtain the aforesaid effect.

It is preferable that in the carbon fiber woven fabric for use in the MEA of the present invention, one of the warp density and the weft density be in the range of 16 threads/cm to 45 threads/cm, and the other thereof be in the range of 12 threads/cm to 40 threads/cm. By increasing the thread density (the number of threads of a carbon fiber woven fabric per unit length or width), the thickness per one thread is made smaller, and it is therefore possible to reduce the thickness of the crossing portions, and thus to decrease the level difference between the convex portions and concave portions on the carbon fiber woven fabric surface. This leads to still a smoother surface of the carbon fiber woven fabric, and further permits formation of a uniform water repellent layer.

Moreover, the increase in thread density can result in that many gap portions existent in the carbon fiber woven fabric and the respective gap portion areas smaller. It is thereby possible to form a large number of fine spaces suitable for smoothly discharging redundant water out of the MEA through the gas diffusion layer, or for dispersing the reaction gas within the gas diffusion layer. These effects bring about smooth discharge of redundant water in an operation under a high humidification condition, thereby allowing provision of an MEA capable of more effectively preventing occurrence of the flooding phenomenon.

The higher the warp density and the weft density of the carbon fiber woven fabric are, the more significantly the above effect can be obtained. However, in the case where a carbon fiber woven fabric has a density beyond the aforesaid favorable range, thread is so thin that it becomes difficult to weave and handle the carbon fiber woven fabric. In the case where a carbon fiber woven fabric has a density below the aforesaid favorable range, on the other hand, thread is so thick as to cause an increase in level difference between the convex portions and concave portions on the carbon fiber woven fabric surface. When an MEA is produced using this carbon fiber woven fabric, gaps which may be clogged with water tend to be formed in the junction between the catalyst layer and the gas diffusion layer.

As the water repellent material to be included in the water repellent layer, a fluorocarbon resin having excellent thermal resistance, acid resistance and chemical resistance such as polytetrafluoroethylene (PTFE) is commonly used as. In the present invention, silicone types and other water repellent materials capable of securing water repellency for a long period of time can also be used. Since the water repellent layer is formed on one side of the gas diffusion layer, which functions as a current collector, and is thus required to have electron conductivity, it is necessary that an electron conductive material be included in the water repellent layer.

As the electron conductive material, carbons are generally used owing to the excellent acid resistance thereof, and among them, acetylene black having strong water repellency is primarily used. Since it is difficult to produce a coating from a carbon having strong water repellency, however, there are cases where Ketjen black, which is a hydrophilic carbon, is more preferably used, depending on how to combine with the water repellent material. As other electron conductive materials used can be metal materials. A typical formation method of a water repellent layer is directly applying a coating for water-repellent-layer formation, prepared by dispersing the above water repellent material and electron conductive material in a dispersing medium such as water, onto one side of the carbon fiber woven fabric. The application method may be any of the spraying, spin coating, doctor blading, screen printing, coater applying and gravure printing methods.

As the gas flow channel to be formed in the separator plate, there are; straight-type gas flow channel which comprises plural straight paths arranged in parallel with each other in one direction from the inlet to the outlet thereof; serpentine-type gas flow channel which comprises single or plural paths arranged to travel in a serpentine line. Shapes of gas flow channel are classified into crossing-type, facing-type and parallel-type, depending on the difference in the directions of the flowing gasses at the anode side and the cathode side. The present invention can effectively apply to a PEFC comprising any of the aforesaid types of gas flow channels.

The present invention provides an operation method of a PEFC which comprises the MEA in accordance with the present invention and a pair of separator plates having the gas flow channel in contact with the external side of the MEA, wherein a dew point of a fuel gas, a dew point of an oxidant gas and the temperature of the MEA in operation are controlled within prescribed temperature ranges.

The MEA of the present invention comprises the gas diffusion layer in which a uniform water repellent layer, free from non-uniform infiltration of the coating for water-repellent-layer formation, is formed on the carbon fiber woven fabric with a smooth surface, as thus described. The MEA in accordance with the present invention has thereby sufficient discharge ability of redundant water and diffusing ability of a gas, which are required in an operation under a high humidification condition of a PEFC. The PEFC comprising this MEA therefore demonstrates an excellent performance especially when operated under the most typical high humidification condition, i.e. when under the condition that the dew point of the fuel gas to be supplied to the anode, the dew point of the oxidant gas to be supplied to the cathode, and the temperature of the MEA in operation are all controlled to the same temperature. In that case, by controlling the dew point of the fuel gas and the dew point of the oxidant gas to temperatures 5°C or less lower than the temperature of the electrolyte membrane-electrode assembly in operation, excellent performance, according to the case of equalizing the aforesaid dew points and temperature, can practically be obtained.

EXAMPLE

Next, the present invention will be described more specifically by examples. In each of the examples and comparative examples, a unit cell was fabricated in a below-described method. FIG. 2 shows the representative view of those unit cells. Onto one side of a plain carbon fiber woven fabric prepared in each example and each comparative example, a coating for water-repellent-layer formation was applied by doctor blading. This coating for water-repellent-layer formation was prepared in such a manner that: acetylene black (AB) was mixed with water at a weight ratio of 1:4, the resultant mixture was added with a small amount of surfactant to be kneaded, which was then added with a PTFE dispersion (D1 manufactured by DAIKIN INDUSTRIES, LTD.) such that the weight ratio of the PTFE solid content to AB was 1:7. The carbon fiber woven fabric with this coating applied onto one side thereof was dried at about 100°C for one hour, and then baked at about 270°C for one hour, to produce a gas diffusion layer 13 in which a water repellent layer was formed on the carbon fiber woven fabric.

Meanwhile, a catalyst layer 12 was attached by transfer printing onto each side of a polymer electrolyte membrane 11 (Nafion 112 manufactured by Du Pont, USA), comprising a perfluorosulfonic acid resin, except for the periphery thereof. Subsequently, each of the gas diffusion layers 13 was attached to each of the catalyst layers 12 such that the water-repellent-layer-side of the gas diffusion layer 13 was in contact with the outer surface of the catalyst layer 12, to produce an MEA 15. The catalyst layer 12 to be transfer-printed onto the polymer electrolyte membrane 11 was formed by applying a paste for catalyst onto a resin sheet, followed by drying. The area of the catalyst layer 12 in the MEA was 25 cm$^2$. The paste for catalyst was prepared in such a manner that: 100 parts by weight of a catalyst obtained by carrying a platinum catalyst on a carbon fine powder (Ketjen Black EC. manufactured by LION CORPORATION) at a weight ratio of 1:1 was mixed with 80 parts by weight of a perfluorosulfonic acid resin dispersed in ethanol, and the obtained mixture was introduced into a mixed dispersing medium of water and ethanol, followed by stirring.

A gasket 18 was then disposed on each side of the polymer electrolyte membrane 11 on the periphery of the MEA 15, which was hot pressed at 100°C for 5 minutes for attachment. The resultant assembly was sandwiched from one side thereof by a cathode-side carbon-made separator plate 17 and from another side by an anode-side carbon-made separator plate 17, and they were cramped such that a surface pressure of about 7 kgf/cm$^2$ was applied to libs 19 formed on the separator plates 17, to fabricate a unit cell of a PEFC. The cathode-side and anode-side separator plates 17 were each provided with the serpentine-type gas flowing channel 16 comprising three grooves with a cross-sectional area of 1.0 cm$^2$.

The thicknesses of the warp thread and the weft thread of the carbon fiber woven fabric used in each example and each comparative example were measured by means of an SEM photograph at a magnification of 100 times taken with an accelerating voltage of 15 kV. The number of threads per 1 cm (warp thread density and weft thread density) was calculated by measuring the number of threads per 5 cm in a micrograph at a magnification of 25 times and then calculating an average value per 1 cm from the above measured value. The carbon fiber woven fabric was punched out into a size of 12 cm $\times$ 12 cm and the weight thereof was measured, from which the basis weight of the carbon fiber woven fabric was calculated. The density of the carbon fiber woven fabric was determined from the above-calculated basis weight and the thickness thereof.

Example 1

A carbon fiber woven fabric, woven by warp threads with a thickness of 0.48 mm comprising a twine and weft threads with a thickness of 0.48 mm comprising a twine, was used as a gas diffusion layer base material to fabricate a unit cell. The carbon fiber woven fabric had a warp thread density of 20.1 threads/cm, a weft thread density of 18.1 threads/cm, a basis weight of 110 g/m$^2$, a thickness of 0.28 mm and a density of 0.393 g/cc.

Example 2

A carbon fiber woven fabric, woven by warp threads with a thickness of 0.45 mm comprising a twine and weft threads with a thickness of 0.45 mm comprising a single yarn, was used as a gas diffusion layer base material to fabricate a unit cell. The carbon fiber woven fabric had a warp thread density of 17.7 threads/cm, a weft thread density of 15.4 threads/cm, a basis weight of 105 g/m$^2$, a thickness of 0.29 mm and a density of 0.362 g/cc.

Example 3

A carbon fiber woven fabric, woven by warp threads with a thickness of 0.445 mm comprising a twine and weft threads with a thickness of 0.445 mm comprising a twine, was used as a gas diffusion layer base material to fabricate a unit cell. The carbon fiber woven fabric had a warp thread density of 15.7 threads/cm, a weft thread density of 15.4 threads/cm, a basis weight of 80 g/m$^2$, a thickness of 0.20 mm and a density of 0.400 g/cc.

Example 4

A carbon fiber woven fabric, woven by warp threads with a thickness of 0.36 mm comprising a twine and weft threads with a thickness of 0.36 mm comprising a twine, was used as a gas diffusion layer base material to fabricate a unit cell. The carbon fiber woven fabric had a warp thread density of 23.6 threads/cm, a weft thread density of 22.00 threads/cm, a basis weight of 115 g/m$^2$, a thickness of 0.29 mm and a density of 0.397 g/cc.

Example 5

A carbon fiber woven fabric, woven by warp threads with a thickness of 0.465 mm comprising a twine and weft threads with a thickness of 0.47 mm comprising a twine, was used as a gas diffusion layer base material to fabricate a unit cell. The carbon fiber woven fabric had a warp thread density of 21.3 threads/cm, a weft thread density of 20.1 threads/cm, a basis weight of 125 g/m$^2$, a thickness of 0.30 mm and a density of 0.417 g/cc.

Comparative Example 1

A carbon fiber woven fabric, woven by warp threads with a thickness of 0.42 mm comprising a twine and weft threads with a thickness of 0.42 mm comprising a twine, was used as a gas diffusion layer base material to fabricate a unit cell. The carbon fiber woven fabric had a warp thread density of 15.7 threads/cm, a weft thread density of 15.7 threads/cm, a basis weight of 114 g/m$^2$, a thickness of 0.30 mm and a density of 0.380 g/cc.

Comparative Example 2

A carbon fiber woven fabric, woven by warp threads with a thickness of 0.47 mm comprising a twine and weft threads with a thickness of 0.47 mm comprising a twine, was used as a gas diffusion layer base material to fabricate a unit cell. The carbon fiber woven fabric had a warp thread density of 21.3 threads/cm, a weft thread density of 17.3 threads/cm, a basis weight of 100 g/m$^2$, a thickness of 0.27 mm and a density of 0.370 g/cc.

A variety of cell tests were conducted in a below-described procedure, using the unit cells in Examples 1 to 5 and Comparative Examples 1 and 2, where a variety of carbon fiber woven fabrics were produced by varying the weaves thereof as thus described. First, a fuel gas (hydrogen gas) heated and humidified so as to have a dew point of 70°C and an oxidant gas (air) heated and humidified so as to have a dew point of 70°C were supplied to the anode and the cathode, respectively, and a cell test 1 was conducted under conditions that the temperature of the MEA in operation was 70°C, a hydrogen gas utilization rate was 70% and an air utilization rate was 40%. Subsequently, the air utilization rate was varied from 40% to 80%, and then a battery test 2 was conducted.

Next, a cell test 3 was conducted under conditions that the dew point of the hydrogen gas to be supplied to the anode was 67°C, the dew point of the air to be supplied to the cathode was 70°C, the temperature of the MEA in operation was 70°C, a fuel gas utilization rate was 70% and an air utilization rate was 40%. Subsequently, the air utilization rate was varied from 40% to 80%, and then a battery test 4 was conducted.

A cell test 5 was conducted under conditions that the dew point of the hydrogen gas to be supplied to the anode was 67°C, the dew point of the air to be supplied to the cathode was 65°C, the temperature of the MEA in operation was 70°C, a fuel gas utilization rate was 70% and an air utilization rate was 40%. Subsequently, the air utilization rate was varied from 40% to 80%, and then a battery test 6 was conducted.

A cell test 7 was conducted under conditions that the dew point of the hydrogen gas to be supplied to the anode was 65°C, the dew point of the air to be supplied to the cathode was 65°C, the temperature of the MEA in operation was 70°C, a fuel gas utilization rate was 70% and an air utilization rate was 40%. Subsequently, the air utilization rate was varied from 40% to 80%, and then a battery test 8 was conducted.

A cell test 9 was conducted under conditions that the dew point of the hydrogen gas to be supplied to the anode was 65°C, the dew point of the air to be supplied to the cathode was 55°C, the temperature of the MEA in operation was 70°C, a fuel gas utilization rate was 70% and an air utilization rate was 40%. Subsequently, the air utilization rate was varied from 40% to 80%, and then a battery test 10 was conducted. A current density during the operation was 0.3 A/cm$^2$ in any of the above cell tests 1 to 10.

Table 1 shows the respective area ratios of the gap portions to the crossing portions: (10/W-Y)(10/Z-X)/XY of the carbon fiber woven fabrics used in Examples 1 to 5 and Comparative Examples 1 and 2, and the respective operating voltage values in the cell tests 1 to 10. In Table 1, the aforesaid area ratio is simply represented by "Area ratio" as a matter of convenience.

Table 1

|  | Ex.1 | Ex.2 | Ex.3 | Ex.4 | Ex.5 | Com. Ex.1 | Com.Ex.2 |
|---|---|---|---|---|---|---|---|
| Area ratio | 1/177 | 1/9 | 1/5 | 1/22 | 1/1449 | 1/4 | 1/5560 |
| *A | 0.731 | 0.729 | 0.726 | 0.730 | 0.736 | 0.718 | 0.621 |
| *B | 0.719 | 0.715 | 0.712 | 0.715 | 0.727 | 0.658 | 0.405 |
| A-B(V) | 0.012 | 0.014 | 0.014 | 0.015 | 0.009 | 0.060 | 0.216 |
| *C | 0.727 | 0.721 | 0.718 | 0.724 | 0.732 | 0.708 | 0.633 |
| *D | 0.718 | 0.714 | 0.709 | 0.711 | 0.726 | 0.688 | 0.477 |
| C-D(V) | 0.009 | 0.007 | 0.009 | 0.013 | 0.006 | 0.020 | 0.156 |
| *E | 0.724 | 0.709 | 0.701 | 0.712 | 0.728 | 0.680 | 0.662 |
| *F | 0.718 | 0.708 | 0.700 | 0.710 | 0.727 | 0.665 | 0.583 |
| E-F(V) | 0.006 | 0.001 | 0.001 | 0.002 | 0.001 | 0.015 | 0.079 |
| *G | 0.724 | 0.700 | 0.698 | 0.709 | 0.728 | 0.651 | 0.676 |
| *H | 0.717 | 0.688 | 0.684 | 0.704 | 0.726 | 0.648 | 0.621 |
| G-H(V) | 0.007 | 0.002 | 0.005 | 0.005 | 0.002 | 0.003 | 0.055 |
| *I | 0.712 | 0.663 | 0.637 | 0.687 | 0.724 | 0.610 | 0.723 |
| *J | 0.716 | 0.681 | 0.659 | 0.698 | 0.724 | 0.643 | 0.722 |
| I-J(V) | -0.004 | -0.018 | -0.022 | -0.011 | 0.000 | -0.033 | 0.001 |

*A: Operating voltage(V) in cell test 1
*B: Operating voltage(V) in cell test 2
*C: Operating voltage(V) in cell test 3
*D: Operating voltage(V) in cell test 4
*E: Operating voltage(V) in cell test 5
*F: Operating voltage(V) in cell test 6
*G: Operating voltage(V) in cell test 7
*H: Operating voltage(V) in cell test 8
*I: Operating voltage(V) in cell test 9
*J: Operating voltage(V) in cell test 10

The result that differences (A-B, C-D. E-F, G-H and I-J) in operating voltage in the case of varying the air utilization rate from 40% to 80% under the same conditions of the reaction gas humidification and of the MEA temperature during the operation are positive values reveals that the operating voltage at the utilization rate of 40% is higher than the operating voltage at the utilization rate of 80%. The result that those differences are small shows that the voltage variation due to the utilization rate (flow rate) of the air to be supplied to the cathode is small so that stable output can be obtained during the operation. On the other hand, the result that the aforesaid differences in operating voltage are large indicates that: the operating voltage is apt to vary due to the flow rate of the air; and when the flow rate of the air is lowered, the operation tends to be in a flooding state. Further, the result that the aforesaid differences in operating voltage are negative values reveals that the operation tends to be in somewhat a dry state when the flow rate is raised because the voltage value increases as the flow rate is lowered.

As understood from Table 1. the unit cells in Examples 1 to 5, using the carbon fiber woven fabrics with the area ratio: (10/W-Y)(10-Z-X)/XY in the range of 1/1500 to 1/5, exhibited higher operating voltages in any of the cell tests 1 to 8 than the operating voltages of the unit cells in Comparative examples 1 and 2, because redundant water in the operation under a high humidification condition in Examples 1 to 5 was smoothly discharged.

On the other hand, as compared with the unit cells in Examples, the unit cells in Comparative Examples 1 and 2, using the carbon fiber woven fabric with the area ratio: (10/W-Y)(10-Z-X)/XY out of the aforesaid range, exhibited lower operating voltages in any of the cell tests 1 to 6, and larger differences (A-B, C-D and E-F) in operating voltage due to the difference in utilization rate (flow rate) of the air. This is presumably because water produced at the cathode was not smoothly discharged to induce the flooding.

More specifically, it is presumed that in Comparative Example 1, a uniform water repellent layer was not formed because there were too many opening portions in the carbon fiber woven fabric, and redundant water was not smoothly discharged because the level difference between the convex portions and concave portions on the surface was large. It is thought on the contrary that in Comparative Example 2, redundant water was not smoothly discharged because there were few opening portions in the carbon fiber woven fabric, causing difficult penetration of redundant water through the gas diffusion layer.

In any of Examples 1 to 5 and Comparative Example 1, the operating voltages observed in the cell tests 9 and 10 are smaller than in the cell tests 1 to 8. Moreover, the result that the differences in operating voltage (I-J) of these unit cells are either minus values or zero indicates that the operation tends to be in somewhat a dry state when an air with a relatively low humidity, a dew point of 55°C, is supplied to the cathode. Meanwhile, in Comparative Example 2, since penetration of water through the gas diffusion layer is difficult, the operation does not tend to be in a dry state and the operating voltage difference (I-J) is a plus value even in the cell tests 9 and 10.

According to the present invention, there can be provided an electrolyte membrane-electrode assembly for polymer electrolyte fuel cells, which has an excellent flooding-resistance characteristic in an operation under a high humidification condition, and can obtain a high operating voltage.

**Claims**

1. An electrolyte membrane-electrode assembly for fuel cells, comprising a polymer electrolyte membrane and a pair of electrodes with said polymer electrolyte membrane interposed therebetween, wherein
   each of said electrodes comprises a catalyst layer in contact with said polymer electrolyte membrane and a gas diffusion layer which has a water repellent layer in contact with the catalyst layer,
   the base material of said gas diffusion layer is made of an electron conductive carbon fiber woven fabric, which is obtained by weaving a warp and a weft threads composed of electron conductive carbon fiber,
   opening portions are formed at or between crossing points of said warp and said weft, and
   the area of opening portions where neither the warp thread nor the weft thread exists is decreased relative to the area of the crossing portions where the warp thread is crossing the weft thread so as to make the ratio between said two areas in the range of 1/1500 to 1/5.

2. The electrolyte membrane-electrode assembly for fuel cells in accordance with claim 1, wherein the relationship: $1/1500 \leqq (10/W\text{-}Y)(10/Z\text{-}X)/XY \leqq 1/5$ is satisfied when said carbon fiber woven fabric has a warp density of Z threads/cm, a weft density of W threads/cm, a warp thickness of X mm and a weft thickness of Y mm.

3. The electrolyte membrane-electrode assembly for fuel cells in accordance with claim 1 or 2, wherein said carbon fiber woven fabric has a thickness in the range of 0.05 mm to 0.3 mm, preferably in the range of 0.05 mm to 0.2 mm.

4. The electrolyte membrane-electrode assembly for fuel cells in accordance with claim 1, 2 or 3, wherein said carbon fiber woven fabric has a density in the range of 0.32 g/cc to 0.42 g/cc.

5. The electrolyte membrane-electrode assembly for fuel cells in accordance with one of claims 1 to 4, wherein one of said warp density and said weft density of said carbon fiber woven fabric is in the range of 16 threads/cm to 45 threads/cm, and the other of said two densities is in the range of 12 threads/cm to 40 threads/cm.

6. The electrolyte membrane-electrode assembly for fuel cells in accordance with one of claims 1 to 5, wherein equally spaced warp threads are crossing equally spaced weft threads at right angles.

7. The electrolyte membrane-electrode assembly for fuel cells in accordance with one of claims 1 to 6, wherein threads are composed of plural fibers (threads), such as twines made of at least two fibers (threads).

8. An operation method of a fuel cell which comprises the electrolyte membrane-electrode assembly for fuel cells in accordance with one of claims 1 to 7, and generates electric power by providing a supply of a humidified fuel gas to the anode and a supply of a humidified oxidant gas to the cathode, comprising a step of:

   controlling the dew point of said fuel gas and the dew point of said oxidant gas to temperatures equivalent to, or 5°C or less lower than, the temperature of said electrolyte membrane-electrode assembly in operation.

**Patentansprüche**

1. Elektrolytmembran-Elektrodenaufbau für Brennstoffzellen, aufweisend eine Polymerelektrolytmembran und ein Paar von Elektroden, zwischen denen die Polymerelektrolytmembran angeordnet ist, wobei
jede der Elektroden eine Katalysatorschicht in Kontakt mit der Polymerelektrolytmembran und eine Gasdiffusionsschicht aufweist, die eine wasserabweisende Schicht in Kontakt mit der Katalysatorschicht aufweist,
das Basismaterial der Gasdiffusionsschicht aus einem Elektronen leitenden Kohlenstofffasergewebe hergestellt ist, das erhalten wird durch Weben von Kett- und Schussfäden, die aus Elektronen leitender Kohlenstofffaser bestehen,
Öffnungsabschnitte in oder zwischen Kreuzpunkten von Kette und Schuss gebildet sind, und
die Fläche von Öffnungsabschnitten wo weder der Kettfaden noch der Schussfaden vorhanden ist, relativ zu der Fläche der Kreuzabschnitte verkleinert ist, wo der Kettfaden den Schussfaden kreuzt, um das Verhältnis zwischen den beiden Flächen in den Bereich von 1/1500 bis 1/5 zu legen.

2. Elektrolytmembran-Elektrodenaufbau für Brennstoffzellen nach Anspruch 1, wobei die Beziehung: 1/1500 ≤ (10/W-Y) (10/Z-X) /XY ≤ 1/5 erfüllt ist, wenn das Kohlenstofffasergewebe eine Kettdichte von Z Fäden/cm, eine Schussdichte von W Fäden/cm, eine Kettdicke von X mm und eine Schussdicke von Y mm aufweist.

3. Elektrolytmembran-Elektrodenaufbau für Brennstoffzellen nach Anspruch 1 oder 2, wobei das Kohlenstofffasergewebe eine Dicke im Bereich von 0,05 mm bis 0,3 mm, bevorzugt im Bereich von 0,05 mm bis 0,2 mm aufweist.

4. Elektrolytmembran-Elektrodenaufbau für Brennstoffzellen nach Anspruch 1, 2 oder 3, wobei das Kohlenstofffasergewebe eine Dichte im Bereich von 0,32 g/cc bis 0,42 g/cc aufweist.

5. Elektrolytmembran-Elektrodenaufbau für Brennstoffzellen nach einem der Ansprüche 1 bis 4, wobei entweder die Kettdichte oder die Schussdichte des Kohlenstofffasergewebes im Bereich von 16 Fäden/cm bis 45 Fäden/cm liegt, und wobei die andere der beiden Dichten im Bereich von 12 Fäden/cm bis 40 Fäden/cm liegt.

6. Elektrolytmembran-Elektrodenaufbau für Brennstoffzellen nach einem der Ansprüche 1 bis 5, wobei gleichmäßig beabstandete Kettfäden gleichermaßen beabstandete Schussfäden rechtwinklig schneiden.

7. Elektrolytmembran-Elektrodenaufbau für Brennstoffzellen nach einem der Ansprüche 1 bis 6, wobei die Fäden aus mehreren Fasern (Fäden) bestehen, wie etwa Zwirnen, die aus zumindest zwei Fasern (Fäden) hergestellt sind.

8. Verfahren zum Betreiben einer Brennstoffzelle, die den Elektrolytmembran-Elektrodenaufbau für Brennstoffzellen nach einem der Ansprüche 1 bis 7 umfasst, wobei das Verfahren die Erzeugung von elektrischem Strom vorsieht durch Bereitstellen einer Charge von befeuchtetem Brennstoffgas zu der Anode und einer Charge von befeuchtetem Oxidansgas zu der Kathode, aufweisend den Schritt: Steuern des Taupunkts des Brennstoffgases und des Taupunkts des Oxidansgases auf eine Temperatur äquivalent zu oder 5°C weniger als der Temperatur des sich in Betrieb befindlichen Elektrolytmembran-Elektrodenaufbaus.

**Revendications**

1. Ensemble électrode-membrane électrolytique pour piles à combustible, comprenant une membrane électrolytique polymère et une paire d'électrodes avec ladite membrane électrolytique polymère placée entre celles-ci, dans lequel chacune desdites électrodes comporte une couche catalytique en contact avec ladite membrane électrolytique polymère et une couche de diffusion de gaz qui a une couche hydrofuge en contact avec la couche catalytique,
le matériau de base de ladite couche de diffusion de gaz est constitué d'un matériau tissé en fibre de carbone conducteur pour les électrons, qui est obtenu en tissant des fils de chaîne et de trame composés d'une fibre de carbone conductrice pour les électrons,
des parties d'ouvertures sont formées au niveau ou entre des points de croisement de ladite chaîne et de ladite trame, et
la région des parties d'ouverture dans laquelle il n'y a ni fil de chaîne, ni fil de trame est réduite par rapport à la région des parties de croisement dans laquelle le fil de chaîne croise le fil de trame afin d'obtenir un rapport entre lesdites deux régions dans la plage de 1/5 000 à 1/5.

**2.** Ensemble électrode-membrane électrolytique pour piles à combustible selon la revendication 1, dans lequel la relation : $1/1500 \leq (10/W-Y)(10/Z-X)/XY \leq 1/5$ est satisfaite lorsque ledit matériau tissé en fibre de carbone a une densité de chaîne de Z fils/cm, une densité de trame de W fils/cm, une épaisseur de chaîne de X mm et une épaisseur de trame de Y mm.

**3.** Ensemble électrode-membrane électrolytique pour piles à combustible selon la revendication 1 ou 2, dans lequel ledit matériau tissé en fibre de carbone a une épaisseur dans la plage de 0,05 mm à 0,3 mm, de préférence dans la plage de 0,05 mm à 0,2.

**4.** Ensemble électrode-membrane électrolytique pour piles à combustible selon la revendication 1, 2 ou 3, dans lequel ledit matériau tissé en fibre de carbone a une densité dans la plage de 0,32 g/cm$^3$ à 0,42 g/cm$^3$.

**5.** Ensemble électrode-membrane électrolytique pour piles à combustible selon une parmi les revendications 1 à 4, dans lequel une parmi lesdites densités de chaîne et lesdites densités de trame dudit matériau tissé en fibre de carbone est dans la plage de 16 fils/cm à 45 fils/cm, et l'autre desdites deux densités est dans la plage de 12 fils/cm à 40 fils/cm.

**6.** Ensemble électrode-membrane électrolytique pour piles à combustible selon une parmi les revendications 1 à 5, dans lequel les fils de chaîne équidistants croisent les fils de trame équidistants à angle droit.

**7.** Ensemble électrode-membrane électrolytique pour piles à combustible selon une parmi les revendications 1 à 6, dans lequel les fils sont composés de plusieurs fibres (fils), telles que des ficelles faites d'au moins deux fibres (fils).

**8.** Procédé de fonctionnement d'une pile à combustible qui comprend l'ensemble électrode-membrane électrolytique pour piles à combustible selon une parmi les revendications 1 à 7 et génère une puissance électrique en délivrant une alimentation d'un gaz combustible humidifié à l'anode et une alimentation d'un gaz oxydant humidifié à la cathode, comprenant une étape consistant à :

commander le point de rosée dudit gaz combustible et le point de rosée dudit gaz oxydant à des températures équivalentes à, ou inférieures de 5 °C ou moins à, la température dudit ensemble électrode-membrane électrolytique en fonctionnement.

F I G. 1

F I G. 2